# EUROPEAN PATENT APPLICATION

(11) **EP 4 701 343 A1**
(43) Date of publication of application: **25.02.2026**
(21) Application number: 24211127.6
(22) Date of filing: 06.11.2024
(51) Int. Cl.: H05B 47/19, H05B 47/175, H05B 45/10

(54) **WIRELESS DISTRIBUTION NETWORK SYSTEM USING LASER ASSISTANCE AND CONTROL METHOD THEREOF**

(30) Priority: 22.08.2024 CN 202411157680
(71) Applicant: Self Electronics Co., Ltd., Ningbo City, Zhejiang 315103 (CN); SELF ELECTRONICS Germany GmbH, 51149 Köln (DE)
(72) Inventor: WANG, Ke, Ningbo, 315103 (CN); ZOU, Huimin, Ningbo, 315103 (CN); YING, Junjun, Ningbo, 315103 (CN); PAN, Huangfeng, Ningbo, 315103 (CN); DONG, Jianguo, Ningbo, 315103 (CN)
(74) Representative: 2K Patentanwälte Blasberg Kewitz & Reichel

(57) **Abstract**

The present invention provides a wireless distribution network system using laser assistance, comprising: a remote controller, including a first power module, a human-machine interaction module, a first main control unit, a first communication unit and a laser emission unit; a receiver, arranged in an electrical equipment, including a second power module, a second main control unit, a second communication unit and a laser receiving unit; according to the input signal of the input unit of the human-machine interaction module, the first main control unit controls the laser emission unit to emit a carrier instruction to the receiver, after the laser receiving unit receives the carrier instruction and decodes it into a control instruction, it sends the control instruction to the second main control unit to make the second communication unit enter the networking state and connect to the wireless network to communicate with other communication units. The present invention also provides a wireless control method for said system. The present invention utilizes the directivity and accuracy of the laser beam to achieve rapid positioning networking and instant control of the target.

## Description

This present application claims priority of Chinese patent application no. CN 202411157680.8 filed on Aug. 22, 2024, the disclosures of which are incorporated herein by reference in its entirety.

### Field of Invention

The present invention relates to the field of lighting control technology, and in particular, to a wireless distribution network system using laser assistance and control method thereof.

### Background of Invention

Among smart lighting systems, wireless networking technologies such as Wi-Fi, Bluetooth mesh and Zigbee are widely adopted for remote control and automated management of lamps. These technologies enable users to adjust light brightness, color temperature, and switch status through smartphones, tablets or dedicated controllers. However, in a multi-node lighting environment, there are challenges in networking, grouping of multiple lights and precisely controlling individual lamp or group of lamps, especially in mass-installation scenarios such as commercial buildings, public spaces and large venues. The existing wireless networking technologies bring convenience in the application of smart lighting systems, but they suffer from the following major problems:
(1) Difficulty in equipment identification: in an environment where a large number of lamps work simultaneously, it is difficult for users to accurately select the target lamp for control, especially when the lamps have similar appearances or are physically located close to each other, the problem is particularly prominent.
(2) Networking complexity: traditional wireless networking technologies require complex setup processes in a multi-node environment, including device discovery, pairing, and network configuration, which increases user's operation difficulty and system maintenance costs.
(3) Signal interference and stability: in a dense wireless device network, signal interference may cause delays or losses of control commands, affecting user experience and system reliability.

Accordingly, those skilled in the art are committed to developing a wireless distribution network system using laser assistance and its control method to achieve rapid positioning and instant control of target lamps.

### Summary of Invention

In view of this, the technical problem to be solved by the present invention is the problems of difficult equipment identification, signal interference and complex of the distribution network in the prior art.

This problem is solved by a wireless distribution network system using laser assistance as claimed in claim 1. Further advantageous embodiments are the subject-matter of the dependent claims.

According to the present invention there is provided a wireless distribution network system using laser assistance, comprising: a remote controller, including a first power module, a human-machine interaction module, a first main control unit, a first communication unit and a laser emission unit, and the first power module supplies power to each unit within the remote controller, the first main control unit is connected to the human-machine interaction module, the first communication unit and the laser emission unit respectively, the first main control unit is configured to control the first communication unit to connect to a wireless network and acquire network information and equipment information; a receiver, arranged in an electrical equipment, including a second power module, a second main control unit, a second communication unit and a laser receiving unit, and the second power module supplies power to each unit within the receiver, the second main control unit is connected to the second communication unit and the laser receiving unit respectively, the second communication unit and the laser receiving unit are capable to communicate with the second main control unit;
the human-machine interaction module comprises an input unit, the remote controller controls the laser emission unit to emit a carrier instruction to the receiver through the first main control unit according to the input signal of the input unit, and the receiver corresponding to the laser emission direction responds to an answering state, the laser receiving unit receives the carrier instruction and then decodes the carrier instruction into a control instruction and sends the control instruction to the second main control unit; the control instruction comprises a networking instruction, the second main control unit can send the networking instruction to the second communication unit to make the second communication unit enter a networking state and connect to the wireless network to communicate with other communication units.

According to a further embodiment, the receiver comprises an adjustment module, the second main control unit is connected to the adjustment module which is configured in the electrical equipment; the control instruction further comprises an adjustment instruction, which is sent by the second main control unit to the adjustment module to change operating parameters of the electrical equipment.

According to a further embodiment, the human-machine interaction module comprises a display unit, and the display content of the display unit comprises the network information and device information acquired by the first main control unit through the first communication unit.

According to a further embodiment, the electrical equipment is provided as one or more, and each of the electrical equipment is configured with a receiver.

In an embodiments of the present invention, the electrical equipment is configured an LED lamp, and the second main control unit is configured to control the adjustment module to send a dimming signal to the LED lamp.

According to a further embodiment, the answering state is specified in a way that the LED lamp is made to flash or an indicator light on the receiver is made to flash.

According to a further embodiment, the input methods of the input unit comprise voice input, gesture input, key input, and touch screen input.

According to a further embodiment, the control instruction comprises a network deletion instruction, which is configured to be sent by the second main control unit to the second communication unit, causing the second communication unit to disconnect or exit the wireless network.

According to a further embodiment, in the wireless network, at least one of the first communication unit and the second communication unit is configured as a wireless communication node.

A control method of wireless distribution network system using laser assistance in also provided in the present invention, for controlling LED lamps of a lighting system, comprising one of the following steps or a combination thereof:
S 1: send the networking instruction through the input unit of the human-machine interaction module of the remote controller to enter the networking state, then select an existing or a new wireless network as the wireless network to be joined, and make the first communication unit connect and join the selected wireless network;
S2: in the networking state, point the laser emitting unit of the remote controller to the LED lamp to be networked, the carrier instruction with the networking instruction is emitted by the laser emitting unit, then the pointed LED lamp receives the carrier instruction through the laser receiving unit and displays as the answering state, and the LED lamp in the answering state is added to the wireless network after selection and confirmation through the input unit;
S3: send a lamp selection instruction through the input unit to enter a lamp selection state and select an LED lamp to be adjusted, set adjustment parameters in the input unit and emit the carrier instruction with an adjustment instruction through the laser emitting unit of the remote controller to the laser receiving unit on the LED lamp to be adjusted, the second main control unit is connected to an adjustment module, after the carrier instruction is decoded by the receiver, the adjustment instruction is sent by the second main control unit to the adjustment module to change operating parameters of the LED lamp.

According to a further embodiment in S2, keep controlling the input unit to maintain an emission state of the laser emitting unit and make one pointed LED lamp receives the networking instruction and displays as the answering state, then stop the emission state, after the pointed LED lamp joining the network, re-emit the laser and point to the next LED lamp to be networked, thus to join the network one by one.

According to a further embodiment, the human-machine interaction module comprises a display unit, and the display content of the display unit comprises the network information and device information acquired by the first main control unit through the first communication unit, in S3 the LED lamp to be adjusted is selected by means of: select the displayed LED lamp that has been added to the wireless network via the input unit; or, trigger the laser emitting unit to work via the input unit, point to the LED lamp to be selected, and confirm the selection after the LED lamp responds.

According to a further embodiment, a lamp group is formed by means of selecting displayed multiple LED lamps that have been added to the wireless network via the input unit, then set adjustment parameters via the input unit to synchronously adjust the operating parameters of all LED lamps in the lamp group.

### Technical effects of the present invention

The wireless distribution network system using laser assistance and its control method of the present invention overcomes the limitations of the prior art and is particularly suitable for smart lighting systems. By utilizing the directivity and accuracy of the laser beam, the present invention realizes rapid positioning and instant control of the target lamps, thereby simplifying the device identification and control process in a multi-node environment. The technical core of the present invention lies in combining the laser pointer with wireless communication technology. Through the directional remote control method, users can intuitively select and control any specific lamp, and it can be easily achieved even in a complex and crowded lighting environment. The control method based on this system not only significantly improves the user experience but also reduces the complexity of system configuration and maintenance, providing more accurate and efficient control means for smart lighting systems.

### Overview on drawings

Hereinafter, the invention will be disclosed with reference to the drawings and exemplary embodiments, from which further features, technical effects and problems to be solved will become apparent. In the drawings:
- Fig. 1: is a schematic structural diagram of an embodiment of a wireless distribution network system according to the present invention.
- Fig. 2: is a schematic structural diagram of another embodiment of a wireless distribution network system according to the present invention.
- Fig. 3: is a schematic flow diagram of a control method of wireless distribution network system according to the present invention.

Throughout the drawings, like reference numerals designated identical or substantially equivalent elements or groups of elements.

### Detailed description of preferred embodiments

Specific embodiments of the present invention will be further described in detail below based on the accompanying drawings. It should be understood that the descriptions of the embodiments of the present invention herein are not intended to limit the protection scope of the present invention.

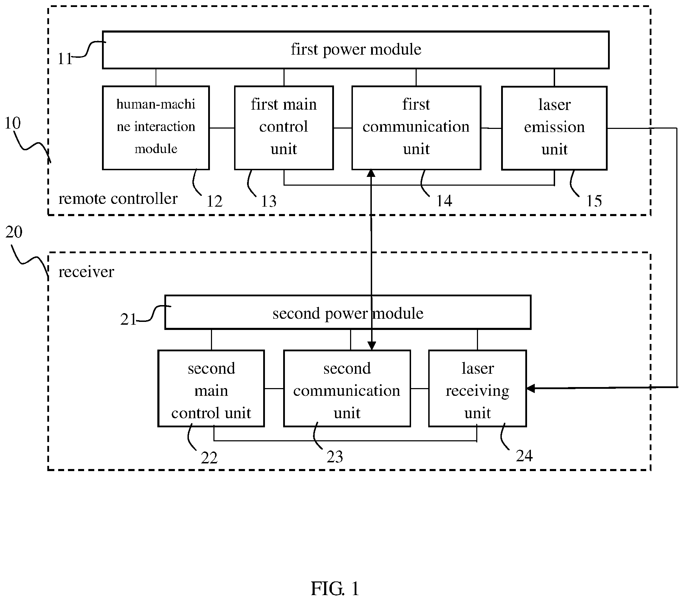

As shown in FIG. 1, a schematic diagram of a wireless networking system using laser assistance according to the present invention, comprises a remote controller 10 and a receiver 20. The remote controller 10 comprises a first power module 11, a human-machine interaction module 12, a first main control unit 13, a first communication unit 14 and a laser emission unit 15. The first power module 11 may be optionally a portable power supply device such as a battery which is used to supply power to each unit within the remote controller 10. The first main control unit 13 is respectively connected to the human-machine interaction module 12, the first communication unit 14 and the laser emission unit 15. The first main control unit 13 is configured to control the first communication unit 14 to connect to a wireless network and acquire network information and equipment information. The receiver 20 is arranged in an electrical equipment and comprises a second power module 21, a second main control unit 22, a second communication unit 23 and a laser receiving unit 24. The second power module 21 may be optionally an AC-DC converter, etc., and supplies power to each unit within the receiver 20. The second main control unit 22 is respectively connected to the second communication unit 23 and the laser receiving unit 24.

The human-machine interaction module 12 comprises an input unit. The input unit is connected to the first main control unit 13 to emit an input signal to the first main control unit 13. When there is a need for network distribution, etc., the user operates the remote controller 10 to input information or motions to the input unit. According to the input signal of the input unit, the laser emission unit 15 is controlled by the first main control unit 13 to emit a carrier instruction to the receiver 20. After the receiver 20 corresponding to the laser emission direction receives the laser carrier instruction, it responds to an answering state. After the laser receiving unit 24 receives the carrier instruction and decodes it into a control instruction, it sends the control instruction to the second main control unit 22. The control instruction may be configured an instruction corresponding to various control functions, including a networking instruction. The second main control unit 22 can send the networking instruction to the second communication unit 23 to make the second communication unit 23 enter a networking state and connect to the wireless network to communicate with other communication units, and may communicate with the first communication unit 14, and may communicate with other second communication units 23 when other receivers 20 are present.

The first main control unit 13 and the second main control unit 22 comprise microcontrollers and their peripheral circuits. For the above-mentioned wireless network, the wireless communication protocol is not limited to wireless communication technologies such as Bluetooth, Zigbee, Wi-Fi and other types.

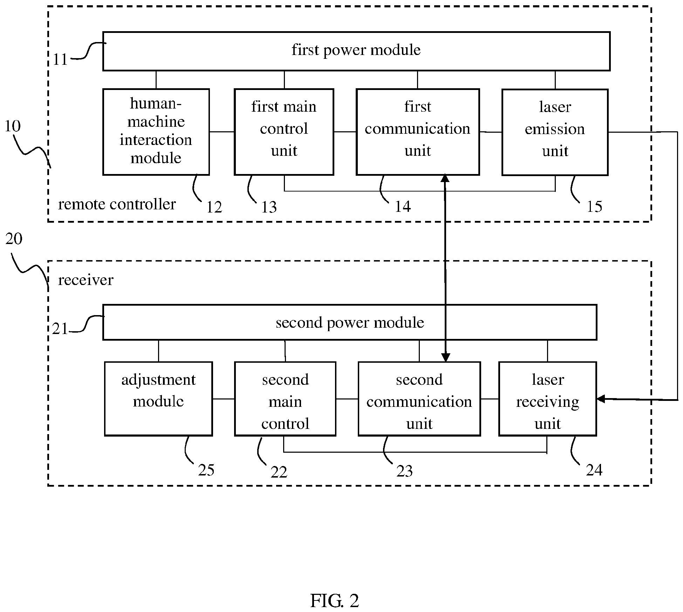

As shown in FIG. 2, in another embodiment of the present invention, the receiver 20 further comprises an adjustment module 25. The second main control unit 22 is connected to the adjustment module 25. The adjustment module 25 is configured in the electrical equipment. The control instruction further comprises an adjustment instruction. The second main control unit 22 may be configured to send the adjustment instruction to the adjustment module 25 to change the operating parameters of the electrical equipment.

Preferably, the human-machine interaction module 12 further comprises a display unit, which may be optionally a display screen provided on the remote controller 10. The display content of the display unit may comprise the network information and device information acquired by the first main control unit 13 through the first communication unit 14. In this way, when the user holds the remote controller 10 and inputs commands, the user can know the network information (network ID, network status, etc.) currently accessed by the remote controller 10 and the device information (device ID, device parameters, etc.) connected to the same wireless network through the display unit, so as to facilitate the subsequent adjustment operations. In addition, the display unit may also display the current operating state according to the input situation of the input unit, for example, displaying that it has entered the networking state or entered the adjustment state.

In the wireless network distribution system of the present invention, when the number of electrical equipment is set to one, the number of receiver 20 corresponding to the electrical equipment is also set to one. The remote controller 10 and the receiver 20 are both connected into the wireless network, and the electrical equipment can be controlled one-to-one by using the remote controller 10. Further, when the number of the electrical equipment is set to be a plurality, each electrical equipment is configured with one receiver 20. In this way, in the networking state, there are a plurality of second communication units 23 connected to the wireless network, and the second communication unit 23 of one of the receivers 20 communicates with the first communication unit 14 of the remote controller 10 and the second communication units 23 of other receivers 20 after being networked. In a preferred embodiment, in the wireless network, at least one of the first communication unit 14 or the second communication unit 23 is a wireless communication node, which may be a wireless communication unit on the remote controller 10 or on the receiver 20. Adding such a wireless communication unit enables communication with nearby communication units to achieve the function of information transmission within a local area.

In a specific embodiment of the present invention, the electrical equipment is an LED lamp. By means of the laser-assisted carrier instruction, the second main control unit 22 is configured to control the adjustment module 25 to send a dimming signal to the LED lamp. Moreover, after one receiver 20 receives the laser carrier-assisted instruction, the specific way of its answering states to distinguish it from other receivers 20 is to make the LED lamp flash or make the indicator light on the receiver 20 flash. Preferably, the responding LED lamp may be highlighted on the remote controller 10 by the display unit upon the communication between the second communication unit 23 and the first communication unit 14, provided that the wireless network is joined.

Further, after the receiver 20 is pointed at by the remote controller 10 with laser, the control instruction sent from the remote controller 10 to the receiver 20 also comprises a network deletion instruction. The second main control unit 22 sends the network deletion instruction to the second communication unit 23 to make the second communication unit 23 disconnect or exit the wireless network.

The input methods of the input unit comprise voice input, gesture input, key input, touch screen input, etc. Correspondingly, the input unit comprises hardware optionally as a microphone, a camera, a touch screen, a physical key, etc., which is capable of generating corresponding input signals through the user's input actions. Through the first main control unit 13, control instructions such as selection, networking, network deletion, parameter adjustment, etc. are generated and other units are controlled to work.

In an embodiment of the present invention, the input unit comprises a number of keys. Through key operations, functions such as function selection, lamp selection, and parameter adjustment such as increasing or decreasing can be realized. The key operation methods comprise single click, double click or long press. Through the above operations, functions such as entering networking, deleting network, lamp switching, and parameter adjustment as mentioned above can be realized.

The present invention also provides a control method of wireless distribution network system using laser assistance for LED lamp control of a lighting system, comprising the steps of:
S1: send the networking instruction through the input unit of the human-machine interaction module 12 of the remote controller 10 to enter the networking state, then select an existing or a new wireless network as the wireless network to be joined, and make the first communication unit 14 connect and join the selected wireless network;
S2: in the networking state, point the laser emitting unit 15 of the remote controller 10 to the LED lamp to be networked, the carrier instruction with the networking instruction is emitted by the laser emitting unit 15, then the pointed LED lamp receives the carrier instruction through the laser receiving unit 24 and displays as the answering state, and the LED lamp in the answering state is added to the wireless network after selection and confirmation through the input unit;
S3: send a lamp selection instruction through the input unit to enter a lamp selection state and select an LED lamp to be adjusted, set adjustment parameters in the input unit and emit the carrier instruction with an adjustment instruction through the laser emitting unit 15 of the remote controller 10 to the laser receiving unit 24 on the LED lamp to be adjusted, the second main control unit 22 is connected to an adjustment module 25, after the carrier instruction is decoded by the receiver 20, the adjustment instruction is sent by the second main control unit 22 to the adjustment module 25 to change operating parameters of the LED lamp.

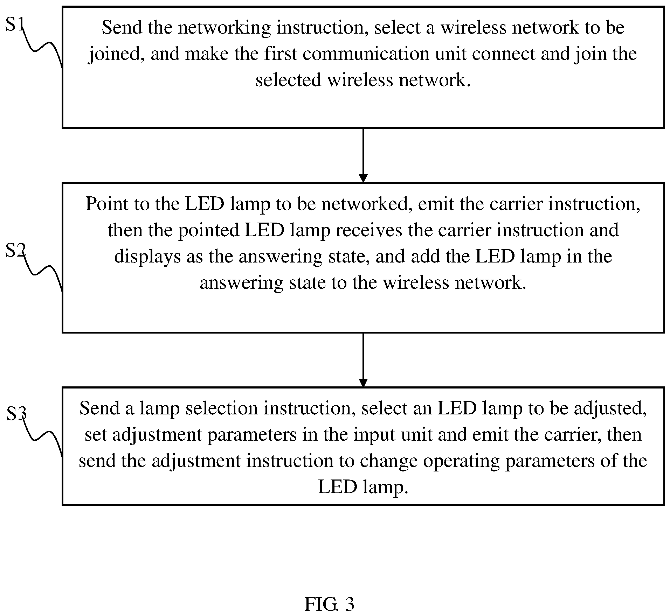

For the above control method of the present invention, each step may be independent of other steps or may combine with each other. For example, steps S2 and S3 can be simultaneously included on the basis of step S1, as shown in Fig. 3, thus, by accessing the wireless networking system through the remote controller 10, the information of the LED lamps in the network can be known, and then combined with the displayed implementation parameters to make intuitive adjustments to the LED lamps. In the case that there's only one LED lamp, network networking can also be ignored and only step S3 can be performed, by using laser assistance, instructions are transmitted between the remote controller 10 and the receiver 20 to achieve the adjustment of the operating parameters of the LED lamp.

Preferably, the human-machine interaction module 12 comprises a display unit. The display content of the display unit comprises the network information and device information acquired by the first main control unit 13 through the first communication unit 14. In step S3, the way to select the LED lamp to be adjusted is: select the displayed LED lamp that has been added to the wireless network via the input unit; or, trigger the laser emitting unit 15 to work via the input unit, point to the LED lamp to be selected, and confirm the selection after the LED lamp responds. Further, among the multiple LED lamps that have joined the wireless network and displayed by the display unit, multiple LED lamps can be selected via the input unit to form a lamp group, and then the adjustment parameters are set via the input unit to achieve synchronous adjustment of all LED lamps in the lamp group. Specifically, multiple second communication units 23 joining the wireless network synchronize and transmit the adjustment parameter information to the respective second main control unit 22, and then drive their respective adjustment module 25, so as to achieve synchronous adjustment.

In an optional embodiment, when a plurality of LED lamps need to be networked, in step S2, the user may keep controlling the input unit to maintain the emission state of the laser emission unit 15, and make one pointed LED lamp receives the networking instruction and displayers as an answering state, then stop the emission state, after the pointed LED lamp joining the network, re-emit the laser and point to the next LED lamp to be networked, thus to join the network one by one. In this way, each operation of the remote controller 10 only controls the lamp pointed at a single time, and will not be interfered by other surrounding lamps and affect the accuracy of lamp selection.

The directional remote control method of the laser emitting unit 15 for LED lamps, compared to the method of searching and selecting one by one through the display interface, enables users to intuitively select and control any specific lamp, which can be easily achieved even in a complex and crowded lighting environment, realizing the convenience of operation.

In accordance with the wireless distribution system and control method described above, an embodiment of a specific control method of the present invention for providing a lighting system may, for example, include the following operations:
(1) Laser networking: human-computer interaction can be achieved through the keys and display unit of the input unit. Firstly, the user may operate the remote controller 10 to enter the network distribution interface, press the key to select a new network setup and then click to add lamp, thus to start the lamp networking. Then, long-pressing the "add lamp" key to trigger the laser emission unit 15 and the remote controller 10 will emit laser, and the laser will carry the networking instruction. Aim the laser beam at the laser receiving unit 24 of the receiver 20 that needs to be networked, after signal processing and decoding by the receiver 20, the second main control unit 22 will obtain the networking instruction. At this time, the second main control unit 22 will cause the second communication unit 23 to enter the networking state and make this second communication unit 23 of the receiver 20 communicate with the first communication unit 14 of the remote controller 10 as well as second communication units 23 of other receivers 20 to realize network configuration. After the devices join the network, the interface of the display unit will show the relevant information of the lamps in the current network. At this time, the user may release the hand to finish the network distribution and turn off the laser emission. According to the above steps, the networking function of any lamp can be achieved. When the user wants to delete a certain device, the user may directly long press the "delete lamp" key, then the laser emission unit 15 will be triggered to emit laser which carries the network deletion instruction. Aim the laser beam at the laser receiving unit 24 of the receiver 20 that needs to be deleted. After signal processing and decoding by the receiver 20, the second main control unit 22 will obtain the instruction to delete the network. At this time, the second main control unit 22 will cause the second communication unit 23 exit the current network to achieve the function of deleting the device
(2) Laser lamp selection: In the device list interface, it is often that many device names cannot be associated with the actual lamps and they need to be searched and confirmed one by one. In such situation, by using the directivity of the laser, the user can quickly achieve the selection of the device to control. The user enters the device list on the interface of the display unit, long-press the "laser lamp selection" key, and the laser emission unit 15 of the remote controller 10 will send the laser carrier lamp selection instruction. Aim the laser beam at the laser receiving unit 24 of the receiver 20 that needs to be selected, after signal processing and decoding by the receiver 20, the second main control unit 22 will obtain the laser lamp selection instruction, and then show a breathing light effect of the pointed LED lamp through the dimming module to respond to the completion of laser communication. And then, the interface of the display unit of the remote controller 10 will directly show the dimming parameter interface of the selected lamp. And subsequently wireless control of the selected LED lamp can also be achieved through the first communication unit 14 and the second communication unit 23.

The above are only preferred embodiments of the present invention, and are not intended to limit the protection scope of the present invention. Any modifications, equivalent replacements or improvements within the spirit of the present invention are included within the scope of the claims of the present invention.

## Claims

1. A wireless distribution network system using laser assistance, comprising:
a remote controller (10), comprising a first power module (11), a human-machine interaction module (12), a first main control unit (13), a first communication unit (14) and a laser emission unit (15), wherein the first power module (11) supplies power to each unit within the remote controller (10), the first main control unit (13) is connected to the human-machine interaction module (12), the first communication unit (14) and the laser emission unit (15) respectively, and the first main control unit (13) is configured to control the first communication unit (14) to connect to a wireless network and acquire network information and equipment information;
a receiver (20), arranged in an electrical equipment or configured to be arranged in an electrical equipment, said receiver (20) comprising a second power module (21), a second main control unit (22), a second communication unit (23) and a laser receiving unit (24), wherein the second power module (21) supplies power to each unit within the receiver (20), the second main control unit (22) is connected to the second communication unit (23) and the laser receiving unit (24) respectively, and the second communication unit (23) and the laser receiving unit (24) are configured to communicate with the second main control unit (22);
**characterized in that** the human-machine interaction module (12) comprises an input unit, the remote controller (10) controls the laser emission unit (15) to emit a carrier instruction to the receiver (20) through the first main control unit (13) according to the input signal of the input unit, and the receiver (20) corresponding to the laser emission direction responds to an answering state, the laser receiving unit (24) receives the carrier instruction and then decodes the carrier instruction into a control instruction and sends the control instruction to the second main control unit (22); the control instruction comprises a networking instruction, the second main control unit (22) is configured to send the networking instruction to the second communication unit (23) to make the second communication unit (23) enter a networking state and connect to the wireless network to communicate with other communication units.

2. The wireless distribution network system using laser assist as claimed in claim 1, wherein the receiver (20) further comprises an adjustment module (25), the second main control unit (22) is connected to the adjustment module (25) which is configured in the electrical equipment or configured to be arranged in electrical equipment; the control instruction further comprises an adjustment instruction, which is sent by the second main control unit (22) to the adjustment module (25) to change operating parameters of the electrical equipment.

3. The wireless distribution network system using laser assistance as claimed in claim 1 or 2, wherein the human-machine interaction module (12) comprises a display unit, and the display content of the display unit comprises the network information and device information acquired by the first main control unit (13) through the first communication unit (14).

4. The wireless distribution network system using laser assistance as claimed in any of claims 1 to 3, wherein the electrical equipment is provided as one or more, and each of the electrical equipment is configured with a receiver (20).

5. The wireless distribution network system using laser assistance as claimed in any of claims 1 to 4, wherein the electrical equipment is an LED lamp, and the second main control unit (22) is configured to control the adjustment module (25) to send a dimming signal to the LED lamp.

6. The wireless distribution network system using laser assistance as claimed in claim 5, wherein the answering state is specified in a way that the LED lamp is made to flash or an indicator light on the receiver (20) is made to flash.

7. The wireless distribution network system using laser assistance as claimed in any of claims 1 to 6, wherein the input methods of the input unit comprise voice input, gesture input, key input, and/or touch screen input.

8. The wireless distribution network system using laser assistance as claimed in any of claims 1 to 7, wherein the control instruction further comprises a network deletion instruction, and the second main control unit (22) is configured to send the network deletion instruction to the second communication unit (23), causing the second communication unit (23) to disconnect or exit the wireless network.

9. The wireless distribution network system using laser assistance as claimed in any of claims 1 to 8, wherein in the wireless network, at least one of the first communication unit (14) and the second communication unit (23) is configured as a wireless communication node.

10. A control method for a wireless distribution network system using laser assistance as claimed in any of claims 1-9, for controlling LED lamps of a lighting system, comprising at least one of the following steps or a combination thereof:
S 1: sending the networking instruction through the input unit of the human-machine interaction module (12) of the remote controller (10) to enter the networking state, selecting an existing or a new wireless network as the wireless network to be joined, and making the first communication unit (14) connect and join the selected wireless network;
S2: in the networking state, pointing the laser emitting unit (15) of the remote controller (10) to the LED lamp to be networked, wherein the carrier instruction with the networking instruction is emitted by the laser emitting unit (15), the pointed LED lamp receives the carrier instruction through the laser receiving unit (24) and displays as the answering state, and the LED lamp in the answering state is added to the wireless network after selection and confirmation through the input unit;
S3: sending a lamp selection instruction through the input unit to enter a lamp selection state and selecting an LED lamp to be adjusted, setting adjustment parameters in the input unit and emitting the carrier instruction with an adjustment instruction through the laser emitting unit (15) of the remote controller (10) to the laser receiving unit (24) on the LED lamp to be adjusted, wherein the second main control unit (22) is connected to an adjustment module (25), and, after the carrier instruction is decoded by the receiver (20), the adjustment instruction is sent by the second main control unit (22) to the adjustment module (25) to change operating parameters of the LED lamp.

11. The control method as claimed in claim 10, wherein in S2, the input unit continues to control to maintain an emission state of the laser emitting unit (15), so that after a pointed LED lamp has received the networking instruction and displays the answering state, the emission state is stopped, and after joining the network, the laser is re-emitted and the next LED lamp to be networked is pointed at, so as to join the network one by one.

12. The control method as claimed in claim 10 or 11, wherein the human-machine interaction module (12) comprises a display unit, and the display content of the display unit comprises the network information and device information acquired by the first main control unit (13) through the first communication unit (14), in S3 the LED lamp to be adjusted is selected by means of:
selecting the displayed LED lamp that has been added to the wireless network via the input unit; or,
triggering the laser emitting unit (15) via the input unit to point to the LED lamp to be selected, and confirming the selection after the LED lamp responds.

13. The control method as claimed in claim 12, wherein a group of lamps is formed by means of selecting displayed multiple LED lamps that have been added to the wireless network via the input unit, and the operating parameters of all LED lamps in the group of lamps are synchronously adjusted by setting an adjustment parameter via the input unit.
